**Europäisches Patentamt**

**European Patent Office**

**Office européen des brevets**

(19)

(11) Numéro de publication: **0 003 093**

**A1**

# DEMANDE DE BREVET EUROPEEN

(12)

(21) Numéro de dépôt: **78430024.6**

(22) Date de dépôt: **18.12.78**

(51) Int. Cl.²: **A 01 K 1/035**
**B 65 D 25/16**

(30) Priorité: **06.01.78 FR 7800757**

(43) Date de publication de la demande:
**25.07.79 Bulletin 79/15**

(84) Etats contractants désignés:
**BE CH DE GB IT LU NL SE**

(71) Demandeur: **Monnet, François**
**Villa Saint Vallier Chemin tordu du Mont Boron**
**F-06300 Nice(FR)**

(72) Inventeur: **Monnet, François**
**Villa Saint Vallier Chemin tordu du Mont Boron**
**F-06300 Nice(FR)**

(74) Mandataire: **Hautier, Jean-Louis et al,**
**Cabinet Hautier 24 rue Masséna**
**F-06000 NICE(FR)**

(54) **Réceptacle à déjections pour petits animaux domestiques.**

(57) Le réceptacle est constitué par un bac (1) contenant un sac plastique. Des moyens d'attache (4a, 4b) solidaires ou non d'un couvercle (5) maintiennent les bords du sac (3a, 3b) sur les bords du bac (1). Le couvercle (5) rotatif autour d'une charnière (6) comporte un compartiment (13) délimité par une cloison interne (12), ladite cloison (12) comportant une ouverture à flancs obliques (17a, 17b), faisant office de doseur pour le sable (14) lorsque le couvercle est ouvert puis remis en place.

EP 0 003 093 A1

·/· · ·

Croydon Printing Company Ltd.

Fig. 3

0003093

- 1 -

## Réceptacle à déjections pour petits animaux domestiques.

L'invention concerne de façon générale, les bacs ou installations sanitaires portatives destinés aux petis animaux domestiques, en particulier les chats, pour leur permettre d'y faire leurs besoins physiologiques.

On connaît de tels réceptacles qui sont constitués par un simple bac partiellement empli d'un produit pulvérulent ou granuleux tel que du sable, mélangé à un matériau désodorisant.

Toutefois, de tels dispositifs rudimentaires se montrent peu pratiques à l'usage, car il est nécessaire de les vider fréquemment, leur désodorisation est insuffisante et l'animal qui les utilise, en grattant le sable, en projette une quantité non négligeable autour du bac et souille ainsi l'environnement.

De plus, il est nécessaire à chaque fois de vider le contenu du réceptacle et de le nettoyer avant de le remplir à nouveau du produit adéquat.

Le réceptacle à déjections selon l'invention, présente de nombreux avantages par rapport à ces types connus.

Il est caractérisé essentiellement par le fait qu'il comporte un bac contenant un sac plastique dont les bords sont maintenus en place sur les côtés du bac au moyen d'attaches faisant office de bavettes de protection ou de gouttières de protection. Le bac peut également comporter des moyens d'attache du sac sur le bac ou/et des bavettes de protection.

Le fond dudit bac comporte des trous qui permettent de faciliter la mise en place du sac plastique qui viendra tapisser le fond en évacuant ainsi aisément l'air.

Ledit bac peut comporter un couvercle amovible indépendant ou monté sur charnières. Dans ce cas, les trois côtés du couvercle comportent les moyens d'attache dudit sac sur les côtés du bac, le côté du couvercle se trouvant sur la charnière comporte une bavette de protection. Cette bavette permet la rotation du couvercle autour de sa charnière sans que les détritus tombent hors du bac.

L'un des côtés du couvercle comporte une ouverture pour l'entrée et la sortie de l'animal, cette ouverture pouvant être fermée par une porte rabattable. De préférence cette porte est articulée sur le couvercle à la partie inférieure de l'ouverture précitée et se rabat extérieurement vers le bas pour dégager ladite ouverture. L'animal est alors forcé de marcher sur cette porte pour pénétrer dans le boîtier et ladite porte comporte avantageusement une planchette en bois tendre afin que l'animal, par exemple un chat, puisse y faire ses griffes et un morceau de tapis de sol ou de moquette (par exemple) pour que le chat, en marchant dessus, enlève le sable qu'il a sous les pattes.

Il est prévu que, lorsque ladite porte est rabattue vers le bas, l'ouveture correspondante du boîtier demeure obturée par un rideau souple à lamelles que l'animal peut franchir sans difficulté et qui présente l'avantage d'empêcher la projection de sable et la diffusion de mauvaises odeurs à l'extérieur.

Avantageusement, tout l'ensemble du couvercle, avec sa porte et son rideau, peut pivoter par rapport au bac, autour d'un de leurs côtés communs, ce qui permet de faire basculer ledit ensemble pour l'ouverture et la fermeture de la chambre.

Selon une autre caractéristique de l'invention, le couvercle est muni, à proximité de sa partie supérieure, d'une cloison interne horizontale délimitant un compartiment contenant une réserve de savle ou de produit analogue. Ce compartiment est muni d'un orifice de remplissage latéral et d'un regard sur sa face supérieure et il comporte vers le bas, une ouverture à flancs obliques qui la fait communiquer avec le bac de réception, cette ouverture étant située du même côté que de la charnière de basculement du couvercle; on comprend que dans ces conditions, lorsque l'on fait basculer ledit couvercle vers la position "ouverte", ladite ouverture va se trouver vers le bas et une partie du sable de réserve contenu dans le compartiment supérieur va s'écouler par gravité par cette ouverture pour tomber dans le bac dont il complètera ainsi le niveau.

Le couvercle, chaque fois qu'il est soulevé complètement puis rabattu, sert en même temps de doseur de sable. L'ouverture du doseur pouvant être réglable, on peut ainsi faire varier la dose de sable à volonté. Ledit cou-

0003093

vercle peut comporter également des ailettes de guidage pour que le sable tombe bien au centre du bac et non sur les côtés.

Les figures ci-annexées illustrent, à titre d'exemple non limitatif, une forme possible de réalisation d'un réceptacle selon l'invention.

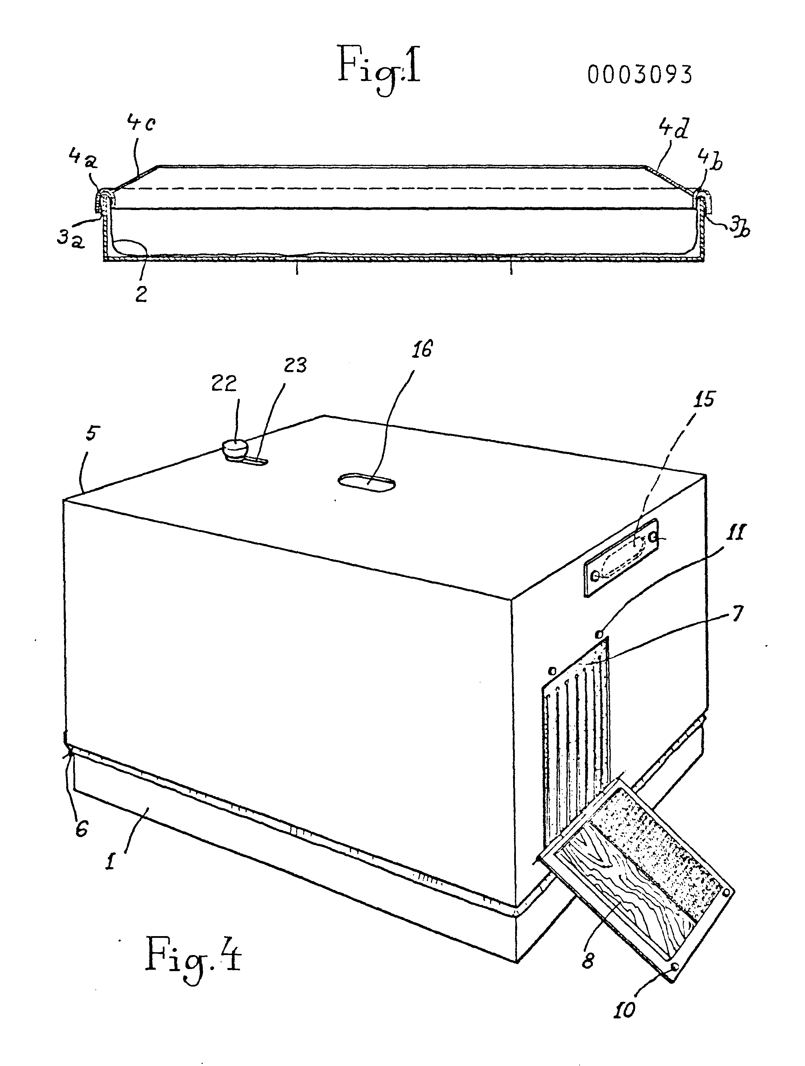

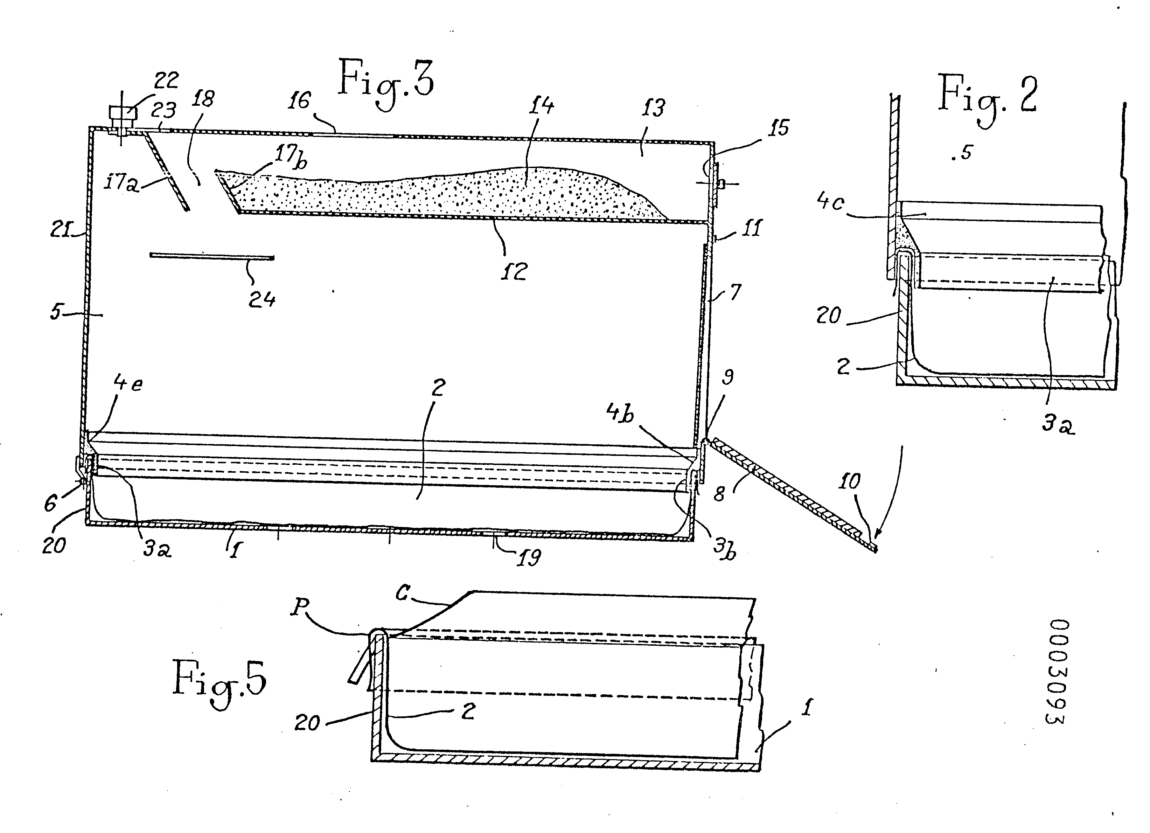

La figure 1 est une vue en coupe d'un bac avec ses moyens d'attache du sac sur ledit bac et ses moyens de protection; la figure 2 est une vue en coupe d'un bac et de son couvercle avec ses moyens d'attache du sac plastique et ses moyens de protection; la figure 3 est une vue en coupe longitudinale et la figure 4, une vue en perspective du bac; la figure 5 est une vue en coupe d'un bac muni d'un sac qui comporte des moyens d'attache et de protection.

Sur ces figures, 1 désigne le bac proprement dit, contenant un sac plastique 2, dont les côtés 3a, 3b sont retournés vers l'extérieur sur les côtés dudit bac 1. Ainsi, le profilé en oméga ou gouttière renversée 4b, des côtés 21 du couvercle 5, viendra pincer et maintenir le sac 2 sur les côtés 20 du bac 1.

Par ailleurs, 5 désigne dans son ensemble le couvercle qui est articulé par une charnière 6 sur l'un des côtés du bac 1. A ce niveau, de manière à permettre la rotation du couvercle, le côté 21 correspondant à la charnière comporte une bavette de protection 4e qui est souple.

Ce couvercle 5 comporte sur un de ses côtés 21, une ouverture obturée en permanence par un rideau souple à lamelles 7 et qui peut être fermée en outre, par une porte 8 articulée au bac en 9 et rabattable vers le bas pour l'ouverture, cette porte comportant, de préférence, une planchette en bois tendre comme il a été dit plus haut. Son maintien en position fermée est avantageusement assuré par des moyens magnétiques 10, 11. La porte 8, de préférence, se trouve désaxée par rapport à l'axe longitudinal du couvercle, pour se trouver contre un des coins du couvercle 5; cette disposition permet,ainsi que le rideau souple à lamelles 7, d'éviter des projections de sable hors du bac.

Conformément à l'invention, parallèlement à la face supérieure du couvercle, est disposée une cloison interne 12 formant une chambre 13 qui contient une réserve de sable 14, cette enceinte étant munie d'un orifice latéral de remplissage 15 et d'un regard supérieur 16.

La cloison 12 comporte un orifice 18 à flancs obliques 17a, 17b qui fait communiquer la chambre réserve 13 avec l'intérieur du couvercle 5, donc avec le fond du bac 1; il est clair que, lorsqu'on fait basculer le couvercle 5 autour de sa charnière 6, une partie de la réserve de sable 14 contenue dans la chambre 13 va s'écouler par l'orifice 18 et tomber dans le sac 2 du bac 1, où l'animal se chargera de le répartir. Le diamètre de l'orifice 18 peut être réglable en écartant plus ou moins les flancs obliques 17a, 17b au moyen d'un bouton de manoeuvre 22 qui peut se déplacer dans un trou oblong 23. La variation du diamètre ou des dimensions de l'orifice 18, permet de changer la dose de sable en fonction de sa nature, par exemple en fonction de sa granulométrie.

Par ailleurs, les côtés 21 du couvercle 5 peuvent comporter des ailettes de guidage 24 qui permettront au sable 14 de bien tomber au centre du bac et non le long des parois du couvercle 5, surtout au moment où ledit couvercle 5 est en cours d'ouverture et de fermeture et que par conséquent, les couvre-joints n'assurent pas une étanchéité avec les bords 20 du bac 1.

Selon la figure 1, le bac 1 sans couvercle peut comporter des moyens d'attache 4a, 4b qui maintiennent les bords du sac 3a, 3b sur les côtés 20 du bac et des moyens de protection 4c, 4d qui empêchent les projections de sable 14 de sortir du bac 1.

Selon la figure 5, le bac 1 peut comporter un sac en plastique ou autre matière analogue jetable, qui comporte directement des pattes d'attache P qui permettent d'accrocher le sac à des crochets disposés sur les côtés 20 du bac 1 et une collerette C comme moyen de protection contre les projections de sable.

Le bac 1 comporte des trous 19 qui permettent de faciliter la mise en place du sac en plastique 2 qui viendra tapisser le fond dudit bac en évacuant ainsi aisément l'air.

- 1 -                          0003093

Revendications de brevet

1. Réceptacle pour les déjections de petits animaux tels que les chats, caractérisé par le fait qu'il est constitué par un bac (1) contenant un sac plastique (2) épousant la forme dudit bac (1) comportant en son fond des trous (19) pour la mise en place dudit sac en évacuant l'air et des moyens d'attache (4a,4b) des bords du sac (3a,3b) sur les bords (20) du bac (1).

2. Réceptacle selon la revendication 1, caractérisé par le fait que le moyen d'attache du bord du sac (4a,4b) sur les bords (20) du bac (1) est formé par le profil en oméga (4b) entrant en force sur les bords (20) du bac (1), les bords (3a, 3b) dudit sac (2) se trouvant pincés entre le profilé en oméga (4b) et les bords (20) du bac (1).

3. Réceptacle selon l'une quelconque des revendications 1 ou 2, caractérisé par le fait que le profilé (4a,4b) utilisé comme moyen d'attache des bords du sac (3a,3b) sur les bords (20) du bac (1) peut également comporter des bavettes de protection (4c,4d) qui évitent aux projections de sortir dudit bac (1) - (figure 1).

4. Réceptacle selon l'une quelconque des revendications 1 ou 3, caractérisé par le fait que les moyens d'attache et de protection sont disposés directement sur le sac (2).

5. Réceptacle selon la revendication 4, caractérisé par le fait que les moyens d'attache disposés sur le sac (2) sont des pattes (P) qui s'accrochent sur les bords du bac (1).

6. Réceptacle selon la revendication 4, caractérisé par le fait que le moyen de protection disposé sur le sac (2) est une collerette (C) qui permet d'éviter les projections de sable hors du bac. (figure 5).

7. Réceptacle selon l'une quelconque des revendications 1 ou 2, caractérisé par le fait que ledit bac (1) peut comporter un couvercle (5) amovible indépendant ou monté sur charnières (6), les côtés (21) dudit couvercle comportant alors les moyens d'attache (4a,4b) destinés à maintenir les bords (3a,3b) du sac (2) contre les bords (20) du bac (1).

8. Réceptacle selon l'une quelconque des revendications 1,2 ou 7, caractérisé par le fait que lorsque le couvercle (5) est monté sur charnières (6), les trois côtés dudit couvercle ont un profil en oméga (4b), tandis que le côté du couvercle (5) se trouvant sur l'axe de la charnière (6) comporte une bavette de protection 4e) permettant la rotation du couvercle (5) autour de sa charnière (6) sans que des détritus tombent hors du bac (1).

9. Réceptacle selon l'une quelconque des revendications 1,2,3,4,5,6,7 ou 8, caractérisé par le fait que le profil du bac (1) contenant le sac plastique (2) et le profil du couvercle (5), coopèrent de manière à tenir en place ledit sac plastique et à toujours faire retomber les projections de sable dans le bac (14).

10. Réceptacle selon l'une quelconque des revendications 1,2,6,7,8,9 ou 10, caractérisé par le fait que le couvercle (5) comporte à sa partie supérieure une cloison interne (12) délimitant un compartiment ou chambre (13) contenant une réserve (14) de sable, ladite chambre com-

- 3 -

0003093

portant des moyens pour l'écoulement du sable (14)
dans le bac (1).

11. Réceptacle selon la revendication 10, caractérisé
par le fait que les moyens permettant l'écoulement du
sable consistent en ce que la cloison (12) comporte
une ouverture à flancs obliques (17a,17b) permettant
l'écoulement d'une partie de la réserve (14) par un
orifice (18), ladite partie de sable (14) étant dosée
lorsque le couvercle (5) est incliné après une rotation
autour de sa charnière (6), l'évacuation par l'orifice
(18) du sable s'effectuant lorsque le couvercle (5)
est rabattu.

12. Réceptacle selon l'une quelconque des revendications
10 ou 11, caractérisé par le fait que le compartiment
(13) de réserve de sable comporte un orifice latéral de
remplissage (15) et un regard supérieur (16).

13. Réceptacle selon l'une quelconque des revendications
10,11 ou 12, caractérisé par le fait qu'un bouton de
manoeuvre (22) déplaçable dans un trou oblong (23) permet à volonté de faire varier l'orifice (18), donc la
dose de sable (14) versée à chaque manoeuvre du couvercle (5).

14. Réceptacle selon l'une quelconque des revendications
1,2,7,8,9,10,11,12 ou 13, caractérisé par le fait que
le couvercle (5) peut comporter des moyens de guidage
(24) tels que des ailettes pour que le sable (14) tombe bien au centre du bac (1) et ce, même au cours de la
manoeuvre dudit couvercle.

Fig.1

0003093

Fig.4

Fig.2

Fig.3

Fig.5

0003093

## DOCUMENTS CONSIDERES COMME PERTINENTS

| Catégorie | Citation du document avec indication, en cas de besoin, des parties pertinentes | Revendication concernee |
|---|---|---|
| X | US - A - 3 990 396 (TURK) <br> * Colonne 2, ligne 55 - colonne 3, ligne 30 * <br><br> -- | 1-2 |
| X | US - A - 3 978 818 (HELDENBRAND) <br> * Colonne 5, lignes 31-47; figures 6-8; colonne 3, ligne 58 - colonne 4, ligne 15, figures 1-4 * <br><br> -- | 1,2,4, 5 |
| X | DE - A - 2 613 659 (GELSZUS) <br> * Document en entier * <br><br> -- | 1,2 |
| X | DE - A - 2 345 698 (FLEXIMAT CORP.) <br> * Page 7, paragraphe 5 - page 9, paragraphe 2, figures 1, 3,4,6 * <br><br> -- | 1,3, 7,9 |
|  | US - A - 4 030 448 (NUTTALL) <br> * Colonne 2, lignes 13-30 * <br><br> -- | 3,6 |
|  | US - A - 3 735 735 (NORDIAN) <br> * Colonne 2, lignes 1-20 * <br><br> -- | 7,10 |
|  | GB - A - 1 316 202 (SMITH) <br> * Page 1, ligne 88 - page 2, ligne 10 * <br><br> ---- | 12 |

**CLASSEMENT DE LA DEMANDE (Int. Cl.²)**

A 01 K 1/035
B 65 D 25/16

**DOMAINES TECHNIQUES RECHERCHES (Int. Cl.²)**

A 01 K
B 65 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 11-04-1979 | CRUCHTEN |

OEB Form 1503.1 06.78